# EUROPEAN PATENT APPLICATION

(11) **EP 4 730 232 A1**
(43) Date of publication of application: **22.04.2026**
(21) Application number: 25205105.7
(22) Date of filing: 26.09.2025
(51) Int. Cl.: G06Q 10/0631, G06Q 10/0639, G06Q 50/02, H04W 4/029

(54) **WORK MANAGEMENT METHOD, WORK MANAGEMENT SYSTEM, AND WORK MANAGEMENT PROGRAM**

(30) Priority: 16.10.2024 JP 2024180503
(71) Applicant: Yanmar Holdings Co., Ltd., Osaka-shi, Osaka (JP)
(72) Inventor: YOSHIMINE, Takumi, Okayama (JP)
(74) Representative: Novagraaf International SA

(57) **Abstract**

[Problem] To display a work device for performing farmwork in a field and a worker who uses the work device in association with each other.

[Solution]A work management method comprises: acquiring (S1) first work device positional information obtained by measuring a position of a first work device (2) that performs work in a field (9), and first worker positional information obtained by measuring a position of a first worker (3) who performs the work with the first work device (2); estimating (S3) a relationship between the first work device (2) and the first worker (3), based on the first work device positional information and the first worker positional information; and displaying (S6) a first integrated icon (74) that integrally represents the first work device (2) and the first worker (3) at a position corresponding to the position of the first work device (2) on a map (91) representing the field (9) when it is estimated that the first work device (2) is being used by the first worker (3).

## Description

### TECHNICAL FIELD

The present invention relates to a work management method, a work management system, and a work management program, and can be suitably used, for example, to manage which worker is using a work device for performing farmwork in a field.

### BACKGROUND ART

In a relatively large-scale farm that manages a plurality of work devices used for farmwork and a plurality of workers engaged in farmwork using the work devices, the combination of the work devices and the workers may be flexible. From the viewpoint of improving the efficiency of work management, there is a demand to grasp at a glance which worker is performing work with which work device.

In relation to the above, Patent Document 1 (Japanese Unexamined Patent Application Publication No. 2022-169981) discloses a work machine management system. The work machine management system of Patent Document 1 displays, on a map, an icon representing the latest position and the operation status of the work machine. However, in the work machine management system of Patent Document 1, the association between the work machine and the worker is not displayed, and thus the above-described demand cannot be satisfied.

### PRIOR ART DOCUMENT

### PATENT DOCUMENT

Patent Document 1: Japanese Unexamined Patent Application Publication No. 2022-169981

### SUMMARY OF INVENTION

### TECHNICAL PROBLEM

In view of the above circumstances, one object of the present disclosure is to provide a work management method, a work management system, and a work management program capable of displaying a work device for performing farmwork in a field and a worker who uses the work device in association with each other. The other objects and novel features of the present disclosure will become apparent from the description of this specification and the accompanying drawings.

### SOLUTION TO PROBLEM

A description will hereinafter be given of means for solving the problems with reference numerals and signs used in embodiments for carrying out the present disclosure. These reference numerals and signs are added in parentheses as references to show an example of corresponding relations between the description of the claims and the embodiment for carrying out the invention. Therefore, the claims should not be construed as being limited to the descriptions with the parentheses.

According to an embodiment, a work management method comprises acquiring (S1) first work device positional information obtained by measuring a position of a first work device (2) that performs work in a field (9), and first worker positional information obtained by measuring a position of a first worker (3) who performs the work with the first work device (2). The work management method further includes estimating (S3) a relationship between the first work device (2) and the first worker (3), based on the first work device positional information and the first worker positional information. The work management method further includes displaying (S6) a first integrated icon (74) that integrally represents the first work device (2) and the first worker (3) at a position corresponding to the position of the first work device (2) on a map (91) representing the field (9) when it is estimated that the first work device (2) is being used by the first worker (3).

According to an embodiment, the work management system (1) includes an information acquisition portion (521), a relationship estimation portion (522), and a display portion (622). The information acquisition portion (521) acquires first work device positional information obtained by measuring a position of a first work device (2) that performs work in a field (9), and first worker positional information obtained by measuring a position of a first worker (3) who performs the work with the first work device (2). The relationship estimation portion (522) estimates a relationship between the first work device (2) and the first worker (3), based on the first work device positional information and the first worker positional information. The display portion (622) displays a first integrated icon (74) that integrally represents the first work device (2) and the first worker (3) at a position corresponding to the position of the first work device (2) on a map (91) representing the field (9) when it is estimated that the first work device (2) is being used by the first worker (3).

According to an embodiment, a work management program is work management program for realizing predetermined process by being executed by an arithmetic device (22, 32, 52, 62). The process includes acquiring (S1) first work device positional information obtained by measuring a position of a first work device (2) that performs work in a field (9), and first worker positional information obtained by measuring a position of a first worker (3) who performs the work with the first work device (2). The process further includes estimating (S3) a relationship between the first work device (2) and the first worker (3), based on the first work device positional information and the first worker positional information. The process further includes displaying (S6) a first integrated icon (74) that integrally represents the first work device (2) and the first worker (3) at a position corresponding to the position of the first work device (2) on a map (91) representing the field (9) when it is estimated that the first work device (2) is being used by the first worker (3).

### ADVANTAGEOUS EFFECTS OF INVENTION

According to one embodiment, a work device and a worker who uses the work device can be displayed in association with each other.

### BRIEF DESCRIPTION OF DRAWINGS

FIG. 1 is a diagram illustrating a configuration example of a work management system according to an embodiment.
FIG. 2 is a block circuit diagram illustrating a configuration example of an on-board terminal according to an embodiment.
FIG. 3 is a block circuit diagram illustrating a configuration example of a worker terminal according to an embodiment.
FIG. 4 is a block circuit diagram illustrating a configuration example of a work management device according to an embodiment.
FIG. 5 is a block circuit diagram illustrating a configuration example of a manager terminal according to an embodiment.
FIG. 6 is a flowchart illustrating an example of a process of a work management method according to an embodiment.
FIG. 7A is a part of a flowchart illustrating an example of a process of a work management method according to an embodiment.
FIG. 7B is a part of a flowchart illustrating an example of a process of a work management method according to an embodiment.
FIG. 8 is a diagram illustrating an example of display of a manager terminal according to an embodiment.
FIG. 9 is a diagram illustrating an example of a work device icon according to an embodiment.
FIG. 10 is a diagram illustrating an example of a worker icon according to an embodiment.
FIG. 11 is a diagram illustrating an example of an integrated icon according to an embodiment.
FIG. 12 is a diagram illustrating an example of an integrated icon according to an embodiment.
FIG. 13 is a diagram illustrating an example of an integrated icon according to an embodiment.

### DESCRIPTION OF EMBODIMENTS

With reference to the accompanying drawings, embodiments for implementing a work management method, a work management system, and a work management program according to the present disclosure will be hereinafter described.

### (Embodiments)

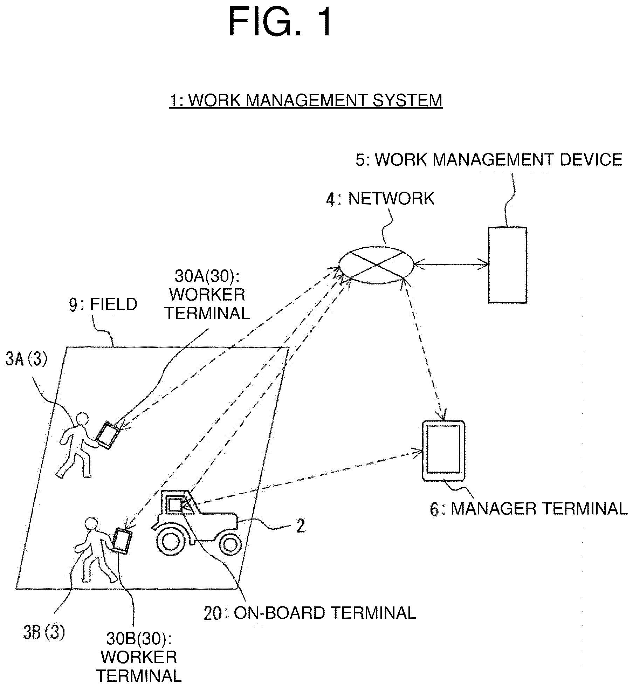

As illustrated in FIG. 1, a work management system 1 according to one embodiment includes an on-board terminal 20 mounted on a work device 2, worker terminals 30A and 30B possessed by workers 3A and 3B, respectively, a work management device 5, and a manager terminal 6 possessed by a manager. Hereinafter, when the workers 3A and 3B are not distinguished from each other, they may be collectively referred to as a worker 3. When the worker terminals 30A and 30B are not distinguished from each other, they may be collectively referred to as a worker terminal 30. The on-board terminal 20, the worker terminal 30, the work management device 5, and the manager terminal 6 may perform wired communication and/or wireless communication via a network 4.

The on-board terminal 20 is mounted on the work device 2. While the work device 2 moves on the ground, the work device 2 performs farmwork such as plowing a field 9 and harvesting crops grown in the field 9. As an example, the work device 2 may be a work device 2 such as a cultivator for cultivating, a transplanter or a rice planter for transplanting, and a combine for harvesting, or may be a tractor for towing a work machine for harvesting, cultivating, fertilizing, and the like.

The on-board terminal 20 generates work device positional information in which the positions of a plurality of points through which the work device 2 passes performing work in the field 9 are measured. Position measurement may be performed using a Global Navigation Satellite System (GNSS) or a quantum compass, which does not require an external auxiliary system such as a satellite. A point where a position of the work device 2 is measured is referred to as a work device positioning point. The work device positional information includes work device positioning time information representing a work device positioning time at which the position of the work device 2 is measured at each work device positioning point. The on-board terminal 20 transmits the work device positional information to the work management device 5.

The worker 3 performs work such as farmwork in the field 9 by using the work device 2. Each worker 3 possesses the worker terminal 30. The worker terminal 30 may include a smartphone, a tablet terminal, a personal computer, and the like, having a communication function, a display function, and an input function. The worker terminal 30 has a function of authenticating the worker 3 by authentication means such as face authentication, fingerprint authentication, voice authentication, and password input. The worker terminal 30 generates worker positional information obtained by measuring the respective positions of a plurality of points through which the authenticated worker 3 passes during the work or before and after the work inside and outside the field 9. Position measurement may be performed using a GNSS or a quantum compass, which does not require an external auxiliary system such as a satellite. A point where a position of the worker 3 is measured is referred to as a worker positioning point. The worker positional information may include worker positioning time information indicating the worker positioning time at which the positions of the workers are measured at the respective worker positioning points. The on-board terminal 20 transmits the worker positional information to the work management device 5.

The work management device 5 estimates the relationship between the work device 2 and the worker 3, based on the work device positional information received from the on-board terminal 20 and the worker positional information received from the worker terminal 30. The relationship between the work device 2 and the worker 3 indicates, for example, whether the work device 2 is being used by any of the workers 3. The work management device 5 generates an icon representing the result of the estimation and displays the icon at position corresponding to each position of the work device 2 and the worker 3 on the map. The work management device 5 may record the result of the estimation and evaluate, based on the past record, the work efficiency of the work performed by each worker 3 using the work device 2. The work management device 5 may transmit, to the manager terminal 6, map information including the icon, evaluation information indicating a result of evaluating the work efficiency, and the like.

The manager terminal 6 may include a smartphone, a tablet terminal, a personal computer, and the like, having a communication function, a display function, and an input function. The manager terminal 6 receives the map information from the work management device 5, and displays a map of a region including the field 9 and icons representing the work device 2 and the worker 3 at positions corresponding to the positions of the work device 2 and the worker 3 on the map so that the manager who uses the manager terminal 6 can visually recognize the icons. The manager terminal 6 may further receive evaluation information from the work management device 5 and display the evaluation of each worker 3 indicated by the evaluation information so that the manager can visually recognize the evaluation.

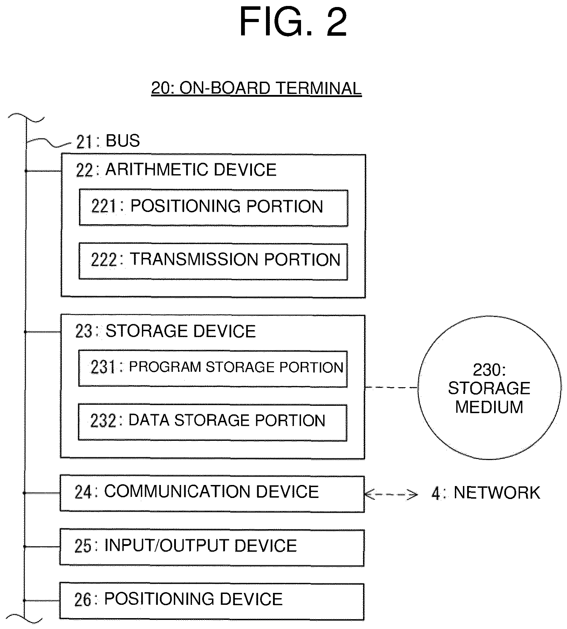

As illustrated in FIG. 2, the on-board terminal 20 according to the embodiment may be configured as a so-called computer. In the example of FIG. 2, the on-board terminal 20 includes a bus 21, an arithmetic device 22, a storage device 23, a communication device 24, an input/output device 25, and a positioning device 26. The bus 21 may be configured to realize communication among the arithmetic device 22, the storage device 23, the communication device 24, the input/output device 25, and the positioning device 26.

The arithmetic device 22 executes at least a part of the work management program according to the embodiment to realize the process of each of the positioning portion 221 and the transmission portion 222. Each of the positioning portion 221 and the transmission portion 222 is a virtual functional block that executes process realized by the arithmetic device 22 and the storage device 23 in cooperation with each other. The positioning portion 221 measures the position of the work device 2 at each of a plurality of times. As an example, the positioning portion 221 measures the position of the work device 2 at a predetermined cycle such as one second or one minute. The time at which the positioning portion 221 measures the position is referred to as a positioning time. The positioning portion 221 generates work device positional information in which work device positioning information representing the measured position of the work device 2 and work device positioning time information representing a positioning time at which each position is measured are associated with each other. The positioning portion 221 may store the work device positional information in the data storage portion 232 of the storage device 23. The transmission portion 222 transmits the work device positional information to the work management device 5. The transmission portion 222 may transmit, to the work management device 5, work device identification information for identifying the work device 2 on which the on-board terminal 20 is mounted together with the work device positional information.

The storage device 23 includes a program storage portion 231 and a data storage portion 232. At least a part of the work management program may be read from an external recording medium 230 and stored in the program storage portion 231. The recording medium 230 may be a non-transitory and tangible medium. The data storage portion 232 may store the work device identification information of the work device 2 in advance. The data storage portion 232 may further store the work device positional information generated by the positioning portion 221.

The communication device 24 communicates with an external device including the work management device 5 by wireless communication or the like via the network 4. At least a part of the work management program may be received from the outside by the communication device 24 and stored in the program storage portion 231.

The input/output device 25 outputs information to the user and receives an operation input by the user. As an example, the input/output device 25 includes a display device that outputs an image and a button or the like that receives an input.

The positioning device 26 measures the position of the work device 2 under the control of the positioning portion 221. The positioning device 26 may measure the position of the work device 2 by a GNSS or the like.

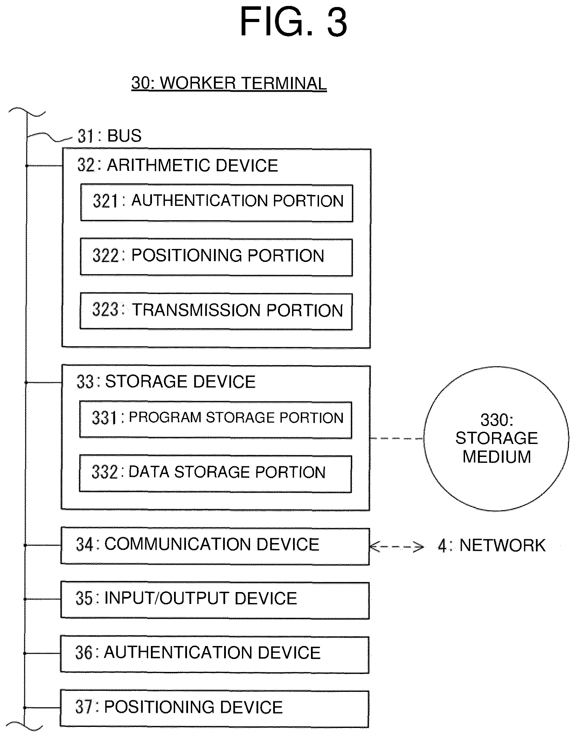

As illustrated in FIG. 3, the worker terminal 30 according to the embodiment may be configured as a so-called computer. In the example of FIG. 3, the worker terminal 30 includes a bus 31, an arithmetic device 32, a storage device 33, a communication device 34, an input/output device 35, an authentication device 36, and a positioning device 37. The bus 31 may be configured to realize communication among the arithmetic device 32, the storage device 33, the communication device 34, the input/output device 35, the authentication device 36, and the positioning device 37.

The arithmetic device 32 executes at least a part of the work management program according to the embodiment to realize the process of each of the authentication portion 321, the positioning portion 322, and the transmission portion 323. Each of the authentication portion 321, the positioning portion 322, and the transmission portion 323 is a virtual functional block that executes process realized by the arithmetic device 32 and the storage device 33 in cooperation with each other. The authentication portion 321 authenticates the worker 3 who possesses the worker terminal 30. The positioning portion 322 measures the position of the worker 3 at each of a plurality of times. As an example, the positioning portion 322 measures the position of the worker 3 at a predetermined cycle such as one second or one minute. The time at which the positioning portion 322 measures the position is referred to as a positioning time. The positioning portion 322 generates worker positional information in which worker positioning information representing the measured position of the worker 3 and worker positioning time information representing a positioning time at which each position is measured are associated with each other. The positioning portion 322 may store the worker positional information in the data storage portion 332 of the storage device 33. The transmission portion 323 transmits the worker positional information to the work management device 5. The transmission portion 323 may transmit, to the work management device 5, worker authentication information representing a result of authenticating the worker 3 who possesses the worker terminal 30 together with the worker positional information.

The storage device 33 includes a program storage portion 331 and a data storage portion 332. At least a part of the work management program may be read from an external recording medium 330 and stored in the program storage portion 331. The recording medium 330 may be a non-transitory and tangible medium. The data storage portion 332 may store the worker positional information generated by the positioning portion 322.

The communication device 34 communicates with an external device including the work management device 5 by wireless communication or the like via the network 4. At least a part of the work management program may be received from the outside by the communication device 34 and stored in the program storage portion 331.

The input/output device 35 outputs information to the worker 3 and receives an operation input by the worker 3. As an example, the input/output device 35 includes a touch panel that combines a display device that outputs an image with a touch pad that receives input by touch operation.

The authentication device 36 authenticates the worker 3 by authentication means such as face authentication, fingerprint authentication, voice authentication, and password input under the control of the authentication portion 321.

The positioning device 37 measures the position of the worker 3 under the control of the positioning portion 322. The positioning device 37 may measure the position of the worker 3 by a GNSS or the like.

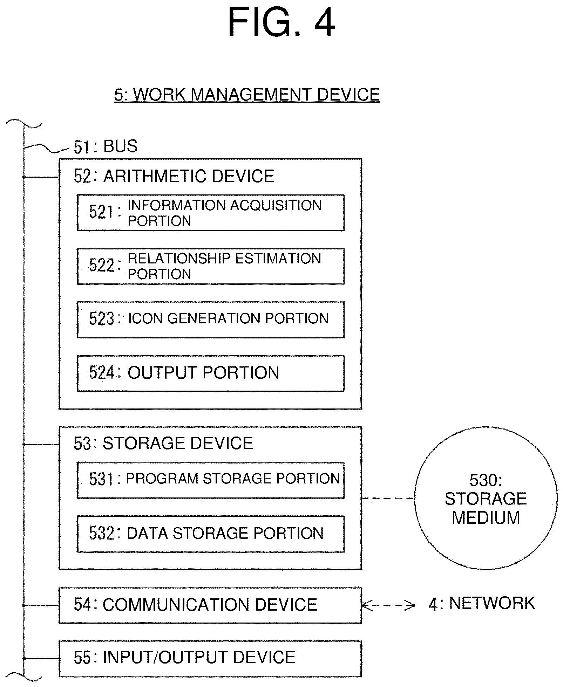

As illustrated in FIG. 4, the work management device 5 according to the embodiment may be configured as a so-called computer. In the example of FIG. 4, the work management device 5 includes a bus 51, an arithmetic device 52, a storage device 53, a communication device 54, and an input/output device 55. The bus 51 may be configured to realize communication among the arithmetic device 52, the storage device 53, the communication device 54, and the input/output device 55.

The arithmetic device 52 executes at least a part of the work management program according to the embodiment to realize the process of each of the information acquisition portion 521, relationship estimation portion 522, icon generation portion 523, and the output portion 524. Each of the information acquisition portion 521, the relationship estimation portion 522, the icon generation portion 523, and the output portion 524 is a virtual functional block that executes process realized by the arithmetic device 52 and the storage device 53 in cooperation with each other. The information acquisition portion 521 receives and acquires the work device positional information from the on-board terminal 20 in FIG. 2, and receives and acquires the worker positional information from the worker terminal 30 in FIG. 3. The information acquisition portion 521 may store the acquired work device positional information and worker positional information in the data storage portion 532 of the storage device 53. The relationship estimation portion 522 estimates the relationship between the work device 2 and the worker 3 on the basis of the work device positional information and the worker positional information. As an example, the relationship estimation portion 522 estimates whether the work device 2 is being used by the worker 3. The relationship estimation portion 522 may store the estimated result in the data storage portion 532 of the storage device 53. The icon generation portion 523 generates an icon of the work device 2 and an icon of the worker 3 on the basis of the result of the estimation. When it is estimated that the work device 2 is being used by the worker 3, the icon generation portion 523 generates an integrated icon of the work device 2 and the worker 3 representing the result of the estimation. The output portion 524 outputs, based on the work device positional information and the worker positional information, information for displaying the generated icon at the position of the work device 2 and/or the worker 3 on a map representing the field 9. The output portion 524 may transmit the information to the manager terminal 6.

The storage device 53 includes a program storage portion 531 and a data storage portion 532. At least a part of the work management program may be read from an external recording medium 530 and stored in the program storage portion 531. The recording medium 530 may be a non-transitory and tangible medium. The data storage portion 532 may store the work device positional information and the worker positional information acquired by the information acquisition portion 521, the information representing the result estimated by the relationship estimation portion 522, the information representing the icon generated by the icon generation portion 523, and the information output by the output portion 524. The data storage portion 532 may further store, before the work management device 5 starts an action, a work device database in which work device identification information for identifying each of the work devices 2 managed by the work management device 5 and work device characteristic information representing a characteristic of each of the work devices 2 are associated with each other.

The communication device 54 communicates with an external device including the on-board terminal 20, the worker terminal 30, and the manager terminal 6 by wireless communication or the like via the network 4. At least a part of the work management program may be received from the outside by the communication device 54 and stored in the program storage portion 531.

The input/output device 55 outputs information to a user and receives operation input by the user. As an example, the input/output device 55 includes a display device that outputs an image and a keyboard and/or a mouse that receives an input.

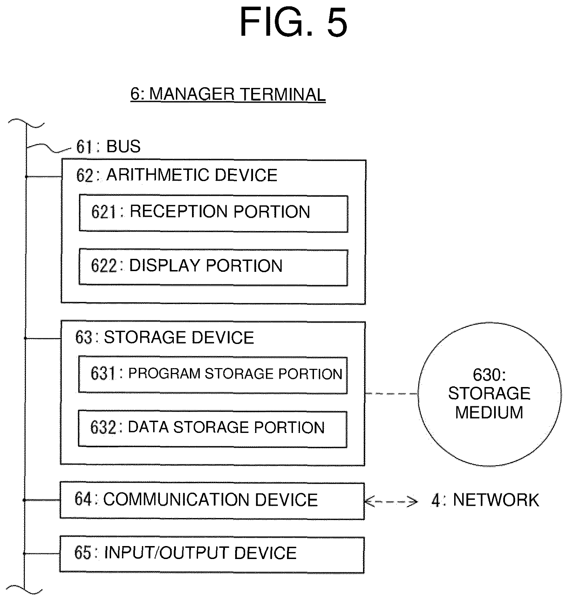

As illustrated in FIG. 5, the manager terminal 6 according to the embodiment may be configured as a so-called computer. In the example of FIG. 5, the manager terminal 6 includes a bus 61, an arithmetic device 62, a storage device 63, a communication device 64, and an input/output device 65. The bus 61 may be configured to realize communication among the arithmetic device 62, the storage device 63, the communication device 64, and the input/output device 65.

The arithmetic device 62 executes at least a part of the work management program according to the embodiment to realize the process of each of the reception portion 621 and the display portion 622. Each of the reception portion 621 and the display portion 622 is a virtual functional block that executes process realized by the arithmetic device 62 and the storage device 63 in cooperation with each other. The reception portion 621 receives information transmitted by the work management device 5 in FIG. 4. The reception portion 621 may store the received information in the data storage portion 632 of the storage device 63 in FIG. 5. The display portion 622 displays, based on the information received from the work management device 5, an icon representing the position of the work device 2 and/or the worker 3 at the position of the work device 2 and/or the worker 3 on a map representing the field 9 so that the manager can visually recognize the icon. The icon may be an integrated icon representing the relationship between the work device 2 and the worker 3 when the work device 2 is being used by the worker 3.

The storage device 63 includes a program storage portion 631 and a data storage portion 632. At least a part of the work management program may be read from an external recording medium 630 and stored in the program storage portion 631. The recording medium 630 may be a non-transitory and tangible medium. The data storage portion 632 may store the information acquired by the reception portion 621.

The communication device 64 communicates with an external device including the work management device 5 by wireless communication or the like via the network 4. At least a part of the work management program may be received from the outside by the communication device 64 and stored in the program storage portion 631.

The input/output device 65 outputs information to the manager and receives an operation input by the manager. As an example, the input/output device 65 includes a touch panel that combines a display device that outputs an image with a touch pad that receives input by touch operation.

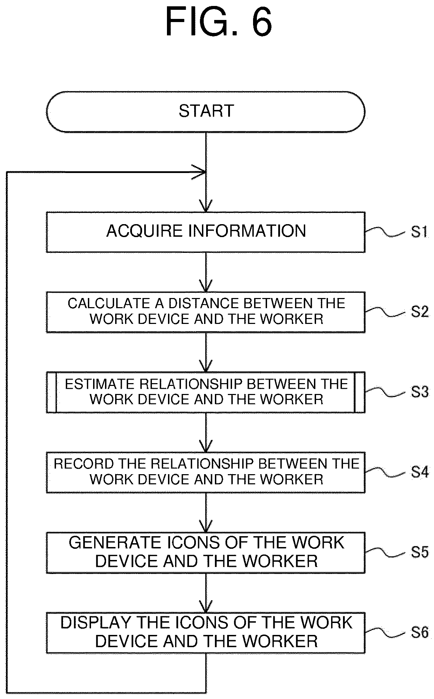

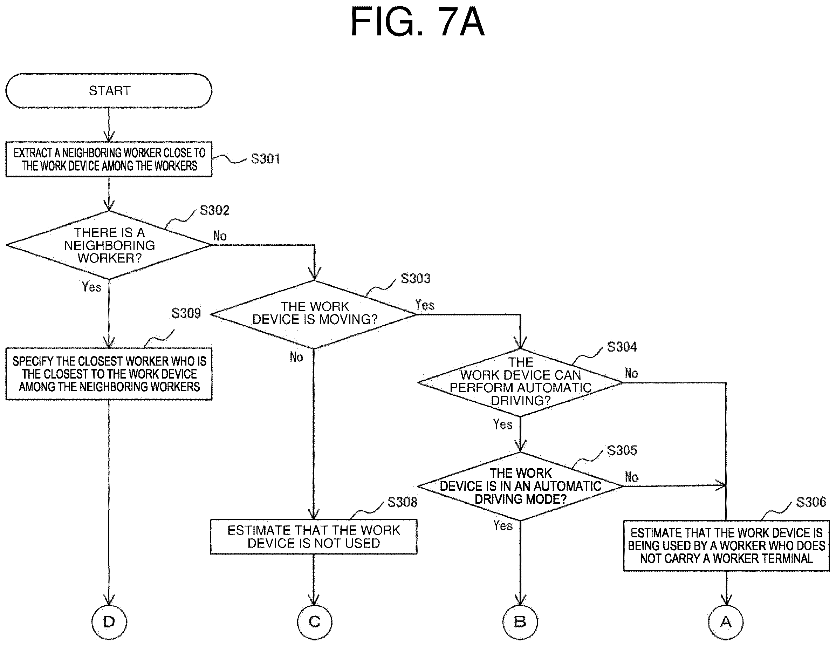

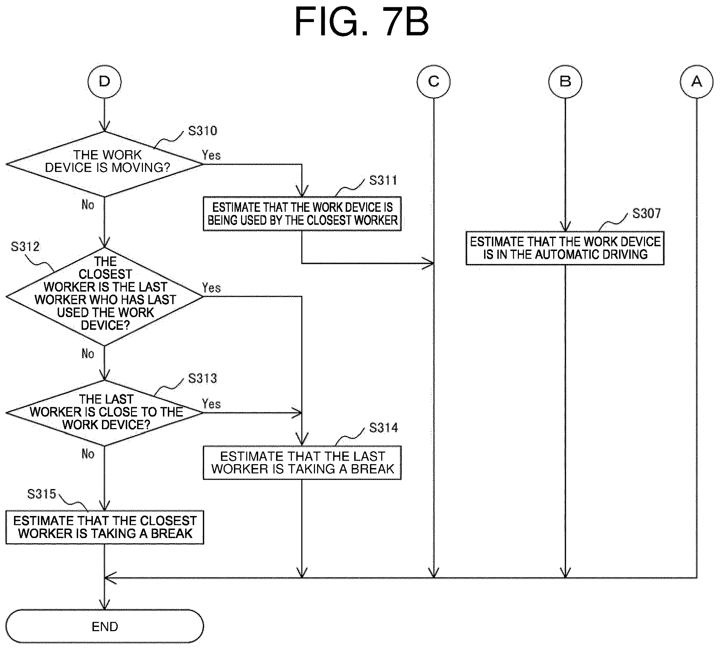

With reference to flowcharts in FIG. 6, FIG. 7A, and FIG. 7B, an example of a process of the work management method according to the embodiment will be described. The work management method may be started when the on-board terminal 20, the worker terminal 30, the work management device 5, and the manager terminal 6 are activated. At this time, each of the on-board terminal 20 in FIG. 2, the worker terminal 30 in FIG. 3, the work management device 5 in FIG. 4, and the manager terminal 6 in FIG. 5 executes at least a part of the work management program, thereby realizing the process of the work management method in the flowcharts of FIG. 6, FIG. 7A, and FIG. 7B.

When the process of the work management method is started, step S1 in FIG. 6 is executed. In step S1, the information acquisition portion 521 of the work management device 5 in FIG. 4 acquires information. The information includes the work device positional information and the work device identification information transmitted by the transmission portion 222 of the on-board terminal 20 in FIG. 2, and the worker positional information and the worker authentication information transmitted by the transmission portion 323 of the worker terminal 30 in FIG. 3.

After step S1 in FIG. 6, step S2 is executed. In step S2, the relationship estimation portion 522 of the work management device 5 in FIG. 4 calculates the distance between the work device 2 and the worker 3. More specifically, when the positioning time at which the position of the work device 2 is measured and the positioning time at which the position of the worker 3 is measured are sufficiently close to each other, the relationship estimation portion 522 calculates the distance between the work device 2 and the worker 3. As an example, when the time between the positioning time of the work device 2 and the positioning time of the worker 3 is shorter than a predetermined first threshold time, the relationship estimation portion 522 calculates the distance between the work device 2 and the worker 3. As an example, the first threshold time may be determined based on at least one of the cycle of measuring the position of the work device 2, the cycle of measuring the position of the worker 3, the movement speed of the work device 2, and the movement speed of the worker 3. When there are a plurality of workers 3, the relationship estimation portion 522 calculates the distance from the work device 2 to each of the workers 3. When there are a plurality of work devices 2, the relationship estimation portion 522 calculates the distance from each work device 2 to each worker 3. The relationship estimation portion 522 may store information representing the calculated distance in the data storage portion 532.

After step S2 in FIG. 6, step S3 is executed. In step S3, the relationship estimation portion 522 of the work management device 5 in FIG. 4 estimates the relationship between the work device 2 and the worker 3. More specifically, the relationship estimation portion 522 estimates whether the work device 2 of interest is being used by any of the workers 3 on the basis of the work device positional information, the work device identification information, the worker positional information, and the worker identification information acquired in step S1 in FIG. 6 and the distances calculated in step S2. Step S3 in FIG. 6 will be described in detail below.

After step S3 in FIG. 6, step S4 is executed. In step S4, the relationship estimation portion 522 of the work management device 5 in FIG. 4 records the relationship between the work device 2 and the worker 3. More specifically, the relationship estimation portion 522 stores the relationship between the work device 2 and the worker 3 estimated in step S3 of FIG. 6 in the data storage portion 532 of FIG. 4 in association with the positioning time of the position of the work device 2 used to estimate the relationship and the positioning time of the position of the worker 3 used to estimate the relationship.

After step S4 in FIG. 6, step S5 is executed. In step S5, the icon generation portion 523 of the work management device 5 in FIG. 4 generates icons of the work device 2 and the worker 3. More specifically, the icon generation portion 523 generates the icon of the work device 2 and the icon of the worker 3 on the basis of the relationship estimated in step S3 of FIG. 6. When the work device 2 is being used by the worker 3, the icon generation portion 523 may generate an integrated icon representing the relationship between the work device 2 and the worker 3. Specific examples of these icons will be described below.

After step S5 in FIG. 6, step S6 is executed. In step S6, the display portion 622 of the manager terminal 6 in FIG. 5 displays the icons of the work device 2 and the worker 3. More specifically, the display portion 622 displays, based on the information transmitted by the output portion 524 of the work management device 5 in FIG. 4 and received by the reception portion 621 of the manager terminal 6 in FIG. 5, the icon representing the position and the relationship between the work device 2 and the worker 3 at a position corresponding to the position of the work device 2 and the worker 3 on a map of a region including the field 9 so that the manager can visually recognize the icon.

After step S6 in FIG. 6, the process of the on-board terminal 20 in FIG. 2, the worker terminal 30 in FIG. 3, the work management device 5 in FIG. 4, and the manager terminal 6 in FIG. 5 returns to step S1, and the process of step S1 to step S6 is repeated.

With reference to a flowchart in FIG. 7A and FIG. 7B, the process of step S3 in FIG. 6 will be described. When step S3 is started, step S301 in FIG. 7A is executed.

In step S301 in FIG. 7A, the relationship estimation portion 522 of the work management device 5 in FIG. 4 extracts a neighboring worker close to the work device 2 among the workers 3. As an example, the relationship estimation portion 522 extracts, as a neighboring worker, the worker 3 located at a position where the distance from the work device 2 of interest is shorter than a predetermined first threshold distance, based on the work device positional information and the worker positional information. The relationship estimation portion 522 may store the extracted worker authentication information of the neighboring worker in the data storage portion 532 in FIG. 4. There may be a case where the worker 3 is not present near the work device 2, that is, there may be a case where no neighboring worker is present.

After step S301 in FIG. 7A, step S302 is executed. In step S302, the relationship estimation portion 522 of the work management device 5 in FIG. 4 determines whether there is a neighboring worker. When there is no neighboring worker (step S302:No in FIG. 7A), the process proceeds to step S303. When there is a neighboring worker (step S302:Yes), the process proceeds to step S309.

In step S303 in FIG. 7A, the relationship estimation portion 522 of the work management device 5 in FIG. 4 determines whether the work device 2 is moving. More specifically, the relationship estimation portion 522 calculates a vehicle speed of the work device 2 on the basis of the work device positional information of the work device 2 of interest, and determines that the work device 2 is moving when the vehicle speed is higher than a predetermined first threshold speed. As an example, the first threshold speed may be determined based on an error in the measurement of the position of the work device 2. When the work device 2 is moving (step S303:Yes in FIG. 7A), the process proceeds to step S304. When the work device 2 is not moving (step S303:No), the process proceeds to step S308.

In step S304 in FIG. 7A, the relationship estimation portion 522 of the work management device 5 in FIG. 4 determines whether the work device 2 can perform automatic driving. More specifically, the relationship estimation portion 522 extracts, based on the work device identification information received from the work device 2 of interest, the work device characteristic information representing the characteristic of the work device 2 from the work device database stored in the data storage portion 532. The relationship estimation portion 522 reads, from the work device characteristic information, information indicating whether the work device 2 of interest can perform the automatic driving. When it is determined that the work device 2 can perform the automatic driving (step S304:Yes in FIG. 7A), the process proceeds to step S305. When it is determined that the work device 2 cannot perform the automatic driving (step S304:No), the process proceeds to step S306.

In step S305 in FIG. 7A, the relationship estimation portion 522 of the work management device 5 in FIG. 4 determines whether the work device 2 is in an automatic driving mode. More specifically, the relationship estimation portion 522 reads, based on the work device identification information received from the work device 2 of interest, information of a remote control device associated with the work device 2 from the work device database stored in the data storage portion 532. The relationship estimation portion 522 communicates with the remote control device, based on the information of the remote control device, and requests an automatic driving mode signal indicating whether the remote control device causes the work device 2 to execute the automatic driving. When the automatic driving mode signal is received from the remote control device, the relationship estimation portion 522 determines that the work device 2 is in the automatic driving mode. When it is determined that the work device 2 is in the automatic driving mode (step S305:Yes in FIG. 7A), the process proceeds to step S307 in FIG. 7B. When the automatic driving mode signal is not received within a predetermined time, the relationship estimation portion 522 determines that the work device 2 is not in the automatic driving mode. When it is determined that the work device 2 is not in the automatic driving mode (step S305:No in FIG. 7A), the process proceeds to step S306.

In step S306 in FIG. 7A, the relationship estimation portion 522 of the work management device 5 in FIG. 4 estimates that the work device 2 is being used by a worker who does not carry a worker terminal. At this time, the relationship estimation portion 522 may control the communication device 54 to transmit a warning signal to the manager terminal 6 in FIG. 5 in consideration of the possibility that the work device 2 is moved for a reason other than the use by the worker, such as the work device 2 being stolen. When the reception portion 621 of the manager terminal 6 receives the warning signal, the display portion 622 may control the input/output device 65 to display information indicating the content of the warning. The manager who operates the manager terminal 6 can confirm the state of the work device 2 without delay in response to the warning. The relationship estimation portion 522 may store the estimation result in the data storage portion 532. After step S306, the process of the flowcharts of FIG. 7A and FIG. 7B ends, and the process proceeds to step S4 in FIG. 6.

In step S307 in FIG. 7B, the relationship estimation portion 522 of the work management device 5 in FIG. 4 estimates that the work device 2 is in the automatic driving. When the work device 2 is in the automatic driving, the work device 2 is not used by any worker 3. The relationship estimation portion 522 may store the estimation result in the data storage portion 532. After step S307, the process of the flowcharts of FIG. 7A and FIG. 7B ends, and the process proceeds to step S4 in FIG. 6.

In step S308 in FIG. 7A, the relationship estimation portion 522 of the work management device 5 in FIG. 4 estimates that the work device 2 is not used. When the work device 2 is not used, the work device 2 is stopped and is not used by any worker 3. The relationship estimation portion 522 may store the estimation result in the data storage portion 532. After step S308, the process of the flowcharts in FIG. 7A and FIG. 7B ends, and the process proceeds to step S4 in FIG. 6.

In step S309 in FIG. 7A, the relationship estimation portion 522 of the work management device 5 of FIG. 4 specifies the closest worker who is the closest to the work device 2 among the neighboring workers. More specifically, the relationship estimation portion 522 specifies a neighboring worker who is the closest to the work device 2 of interest among the neighboring workers extracted at step S301 in FIG. 7A. The specified neighboring worker will be referred to as a closest worker of the work device 2 of interest below. The relationship estimation portion 522 may store, in the data storage portion 532, information representing a result of specifying the closest worker.

After step S309 in FIG. 7A, step S310 in FIG. 7B is executed. In step S310, the relationship estimation portion 522 of the work management device 5 in FIG. 4 determines whether the work device 2 is moving. More specifically, similarly to step S303 in FIG. 7A, the relationship estimation portion 522 calculates a vehicle speed of the work device 2 on the basis of the work device positional information of the work device 2 of interest, and determines that the work device 2 is moving when the vehicle speed is higher than a predetermined first threshold speed. When the work device 2 is moving (step S310:Yes in FIG. 7B), the process proceeds to step S311. When the work device 2 is not moving (step S310:No), the process proceeds to step S312.

In step S311 in FIG. 7B, the relationship estimation portion 522 of the work management device 5 in FIG. 4 estimates that the work device 2 is being used by the closest worker. More specifically, the relationship estimation portion 522 estimates that the work device 2 of interest is being used by the closest worker specified in step S309 in FIG. 7A among the workers 3. The relationship estimation portion 522 may store the estimation result in the data storage portion 532. After step S311, the process of the flowcharts of FIG. 7A and FIG. 7B ends, and the process proceeds to step S4 in FIG. 6.

In step S312 in FIG. 7B, the relationship estimation portion 522 of the work management device 5 in FIG. 4 determines whether the closest worker is the last worker who has last used the work device 2. More specifically, the relationship estimation portion 522 determines whether the closest worker specified in step S309 in FIG. 7A among the workers 3 is the last worker. The last worker is the worker 3 who has last used the work device 2 of interest or the worker 3 who is currently using the work device 2. The relationship estimation portion 522 may specify the last worker, based on the relationship between the work device 2 and the worker 3 estimated in step S3 in FIG. 6 executed in the past and recorded in step S4. At this time, the relationship estimation portion 522 may refer to the information stored in the data storage portion 532. When the closest worker is not the last worker (step S312:No in FIG. 7B), the process proceeds to step S313. When the closest worker is the last worker (step S312:Yes), the process proceeds to step S314.

In step S313 in FIG. 7B, the relationship estimation portion 522 of the work management device 5 in FIG. 4 determines whether the last worker is close to the work device 2. As an example, when the distance from the work device 2 of interest to the last worker is shorter than a predetermined first threshold distance, based on the work device positional information and the worker positional information, the relationship estimation portion 522 determines that the last worker is close to the work device 2. When the last worker is close to the work device 2 (step S313:Yes in FIG. 7B), the process proceeds to step S314. When the last worker is not close to the work device 2 (step S313:No in FIG. 7B), the process proceeds to step S315.

In step S314 in FIG. 7B, the relationship estimation portion 522 of the work management device 5 in FIG. 4 estimates that the last worker is taking a break. As an example, when the work device 2 is being used by the last worker but the last worker is taking a break, a situation in which the work device 2 of interest is stopped and the last worker is close to the work device 2 occurs. After step S314, the process of the flowcharts of FIG. 7A and FIG. 7B ends, and the process proceeds to step S4 in FIG. 6.

In step S315 in FIG. 7B, the relationship estimation portion 522 of the work management device 5 in FIG. 4 estimates that the closest worker is taking a break. As an example, a situation occurs in which the work device 2 of interest is stopped and the closest worker is close to the work device 2 after the last worker who has used the work device 2 until then is replaced with the closest worker and the last worker moves away from the work device 2, and until the closest worker starts to use the work device 2. After step S315, the process of the flowcharts of FIG. 7A and FIG. 7B ends, and the process proceeds to step S4 in FIG. 6.

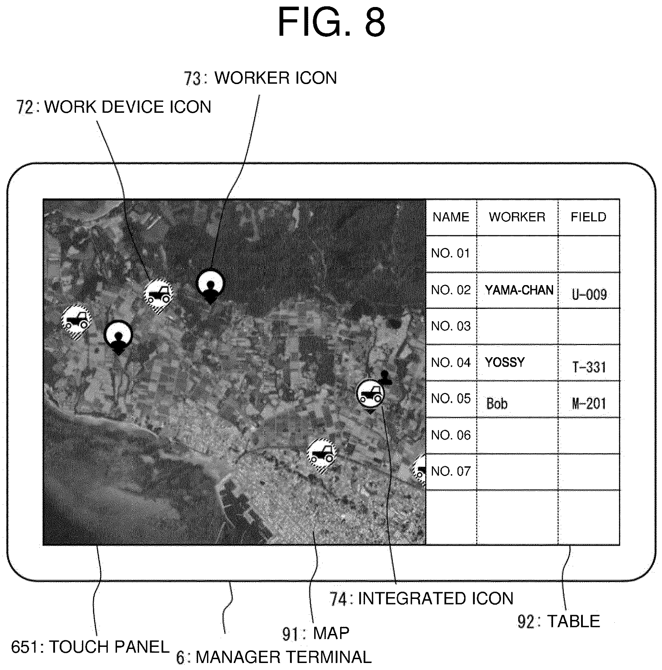

Examples of the icons representing the work device 2 and/or the worker 3 will be described with reference to FIGS. 8, 9, 10, 11, 12, and 13.

FIG. 8 illustrates an example of the display of a touch panel 651 as the input/output device 65 of the manager terminal 6 illustrated in FIG. 5 in step S6 in FIG. 6. In the example of FIG. 8, the touch panel 651 displays a map 91 of a region including the field 9, and a table 92 of the work device 2 and the worker 3 present in the range of the map 91. As illustrated in FIG. 8, the touch panel 651 may display a work device icon 72 representing the work device 2 at a position corresponding to the position of the work device 2 on the map 91 in a superimposed manner on the map 91. The touch panel 651 may display a worker icon 73 representing the worker 3 at a position corresponding to the position of the worker 3 on the map 91 in a superimposed manner on the map 91. The distance between the work device 2 represented by the work device icon 72 and the worker 3 represented by the worker icon 73 is equal to or more than the first threshold distance, and the work device icon 72 and the worker icon 73 are separately displayed.

The touch panel 651 may display an integrated icon 74 indicating the work device 2 being used by the worker 3 and the worker 3 at a position corresponding to the position of the work device 2 on the map 91 in a superimposed manner on the map 91. The distance between the work device 2 and the worker 3 that are represented by the integrated icon 74 is shorter than the first threshold distance.

As illustrated in the example of FIG. 8, the touch panel 651 may simultaneously display a plurality of work device icons 72 representing a plurality of work devices 2. The touch panel 651 may simultaneously display a plurality of worker icons 73 respectively representing a plurality of workers. Similarly, the touch panel 651 may simultaneously display a plurality of integrated icons 74. The touch panel 651 may further display, in the table 92, a correspondence relationship among the work device 2 represented by the work device icon 72 and/or the integrated icon 74, the worker 3 represented by the worker icon 73 and/or the integrated icon 74, and the field 9 where the work device 2 and/or the worker 3 is located.

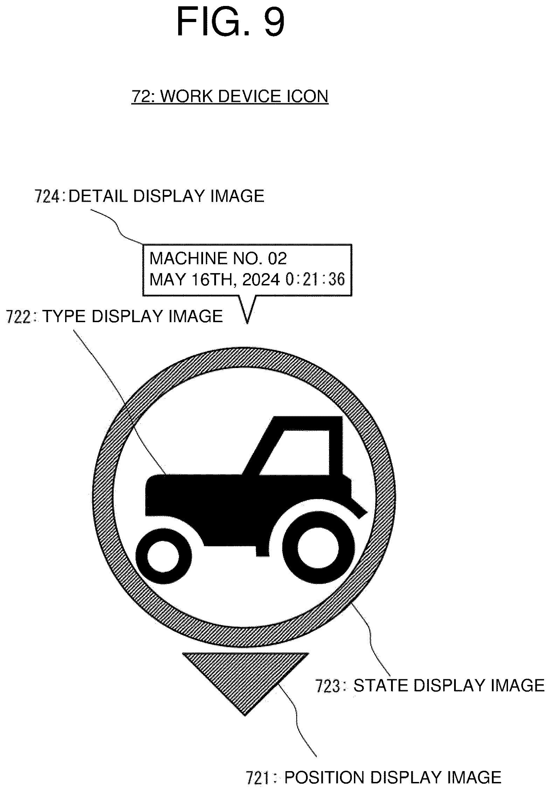

As illustrated in FIG. 9, the work device icon 72 includes a position display image 721, a type display image 722, and a state display image 723. The work device icon 72 may further include a detail display image 724. The positional relationship among the position display image 721, the type display image 722, and the state display image 723 may be fixed. When the detail display image 724 is displayed, the positional relationship of the detail display image 724 with the position display image 721, the type display image 722, and the state display image 723 may be fixed.

The position display image 721 indicates the position of the work device 2 represented by the work device icon 72 on the map 91 represented by the latest work device positional information. In the example of FIG. 9, the shape of the position display image 721 includes a downward triangle, and a downward vertex of the triangle indicates the position of the work device 2 on the map 91.

The type display image 722 represents the type of the work device 2 represented by the work device icon 72. In the example of FIG. 9, the type display image 722 indicates that the work device 2 is a tractor.

The state display image 723 represents the state of the work device 2 represented by the work device icon 72. As an example, the state display image 723 may be displayed such that the manager can easily distinguish between a first state in which the work device 2 is stopped and a second state in which the work device 2 is moving by a difference in color, pattern, shape, or the like.

The detail display image 724 represents details of the work device 2 represented by the work device icon 72. As an example, the detail display image 724 includes the name of the work device 2, the latest positioning time included in the latest work device positional information received from the on-board terminal 20 of the work device 2, and the like. The detail display image 724 may be temporarily displayed when desired by the manager. As an example, the manager may operate the touch panel 651 in FIG. 8 to switch the display and non-display of the detail display images 724 of all the work device icons 72 displayed on the touch panel 651 at once. As another example, the manager may operate the work device icon 72 displayed on the touch panel 651 in FIG. 8 to individually switch the display and non-display of each of the detail display images 724 of the work device icons 72.

The work device icon 72 in FIG. 9 indicates that the work device 2 is not used by any worker 3 and is stopped. As an example, when it is estimated that the work device 2 is not used in step S308 in FIG. 7A, the work device 2 in FIG. 9 may be displayed.

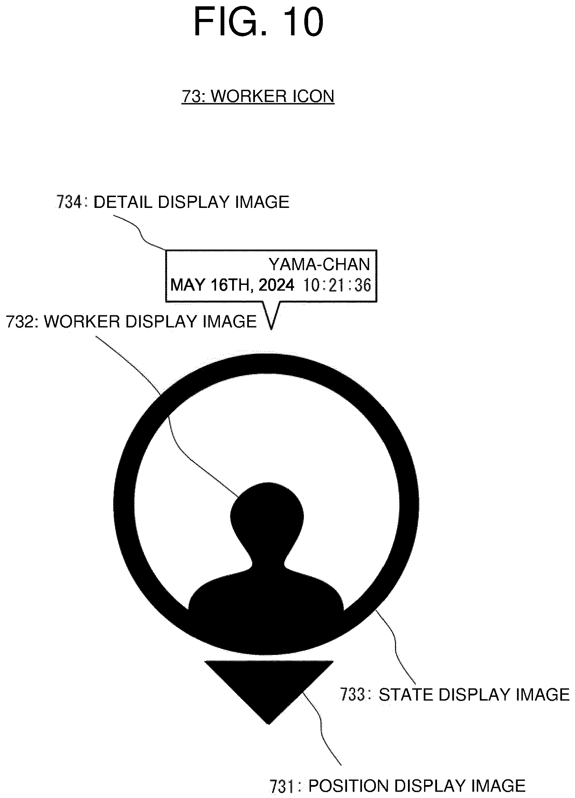

As illustrated in FIG. 10, the worker icon 73 includes a position display image 731, a worker display image 732, and a state display image 733. The worker icon 73 may further include a detail display image 734. The positional relationship among the position display image 731, the worker display image 732, and the state display image 733 may be fixed. When the detail display image 734 is displayed, the positional relationship of the detail display image 734 with the position display image 731, the worker display image 732, and the state display image 733 may be fixed.

The position display image 731 indicates the position of the worker 3 indicated by the worker icon 73 on the map 91 indicated by the latest worker positional information. In the example of FIG. 10, the shape of the position display image 731 includes a downward triangle, and a downward vertex of the triangle indicates the position of the worker 3 on the map 91.

The worker display image 732 includes an image for identifying the worker 3 represented by the worker icon 73. As an example, the worker display image 732 may be a facial photograph of the worker 3.

The state display image 733 represents the state of the worker 3 represented by the worker icon 73. As an example, the state display image 733 may be displayed such that the manager can easily distinguish between a first state in which the worker 3 is stopped and a second state in which the worker 3 is moving by a difference in color, pattern, shape, or the like.

The detail display image 734 represents the details of the worker 3 represented by the worker icon 73. As an example, the detail display image 734 includes the name of the worker 3, the latest positioning time included in the latest worker positional information received from the worker terminal 30 of the worker 3, and the like. The detail display image 734 may be temporarily displayed when desired by the manager. As an example, the manager may operate the touch panel 651 in FIG. 8 to switch the display and non-display of the detail display images 734 of all the worker icons 73 displayed on the touch panel 651 at once. As another example, the manager may operate the worker icon 73 displayed on the touch panel 651 in FIG. 8 to individually switch the display and non-display of each of the detail display images 734 of the worker icons 73.

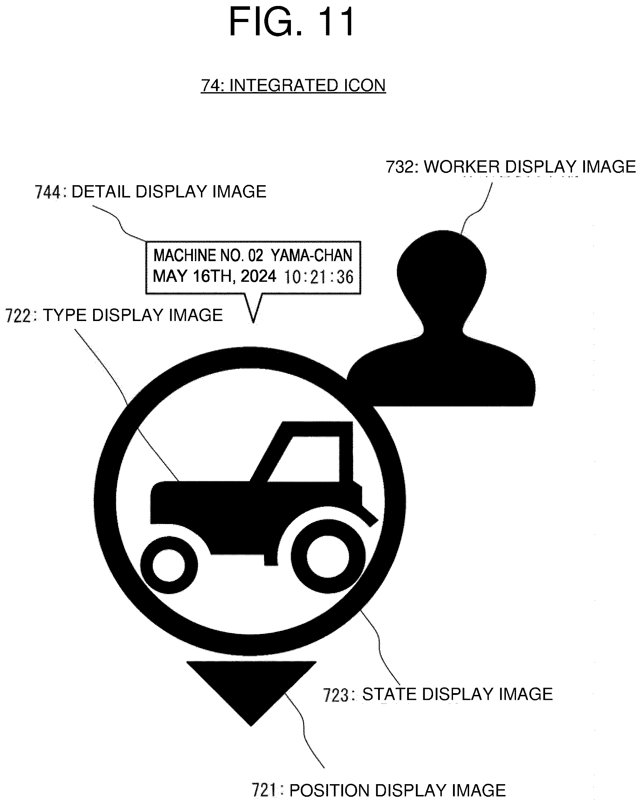

As illustrated in FIG. 11, the integrated icon 74 includes a position display image 721, a type display image 722, a state display image 723, and a worker display image 732. The integrated icon 74 may further include a detail display image 744. The positional relationship among the position display image 721, the type display image 722, the state display image 723, and the worker display image 732 may be fixed. When the detail display image 744 is displayed, the positional relationship of the detail display image 744 with the position display image 721, the type display image 722, the state display image 723, and the worker display image 732 may be fixed.

The position display image 721 of the integrated icon 74 may be the same as the position display image 721 included in the work device icon 72 illustrated in FIG. 9. The type display image 722 of the integrated icon 74 may be the same as the type display image 722 included in the work device icon 72 illustrated in FIG. 9. The state display image 723 of the integrated icon 74 may be the same as the state display image 723 included in the work device icon 72 illustrated in FIG. 9.

The worker display image 732 included in the integrated icon 74 may be the same as the worker display image 732 included in the worker icon 73 in FIG. 10. However, the arrangement of the worker display image 732 in the integrated icon 74 may be moved to another place so as not to overlap with the type display image 722 in the integrated icon 74. In the example of FIG. 11, the worker display image 732 included in the integrated icon 74 is placed on the right upper portion of the state display image 723 included in the integrated icon 74.

The detail display image 724 included in the integrated icon 74 represents details of the work device 2 and the worker 3 represented by the integrated icon 74. As an example, the detail display image 724 includes the name of the work device 2, the name of the worker 3, the latest positioning time included in the latest work device positional information received from the on-board terminal 20 of the work device 2, and the like. The detail display image 744 may be temporarily displayed when desired by the manager. As an example, the manager may operate the touch panel 651 in FIG. 8 to switch the display and non-display of the detail display images 744 of all the integrated icons 74 displayed on the touch panel 651 at once. As another example, the manager may operate the integrated icon 74 displayed on the touch panel 651 in FIG. 8 to individually switch the display and non-display of each of the detail display images 744 of the integrated icons 74.

The integrated icon 74 illustrated in the example of FIG. 11 indicates that the work device 2 is being used by the worker 3 and is moving. At this time, the manager can estimate that the worker 3 is performing work by using the work device 2. As an example, when it is estimated that the work device 2 is being used by the closest worker in step S311 in FIG. 7B, the integrated icon 74 in FIG. 11 may be displayed. When it is estimated that the work device 2 is being used by the worker who does not carry the worker terminal and thus it is unknown who is the worker using the work device 2 in step S306 in FIG. 7A, an icon obtained by omitting the worker display image 732 from the integrated icon 74 in FIG. 11 may be displayed.

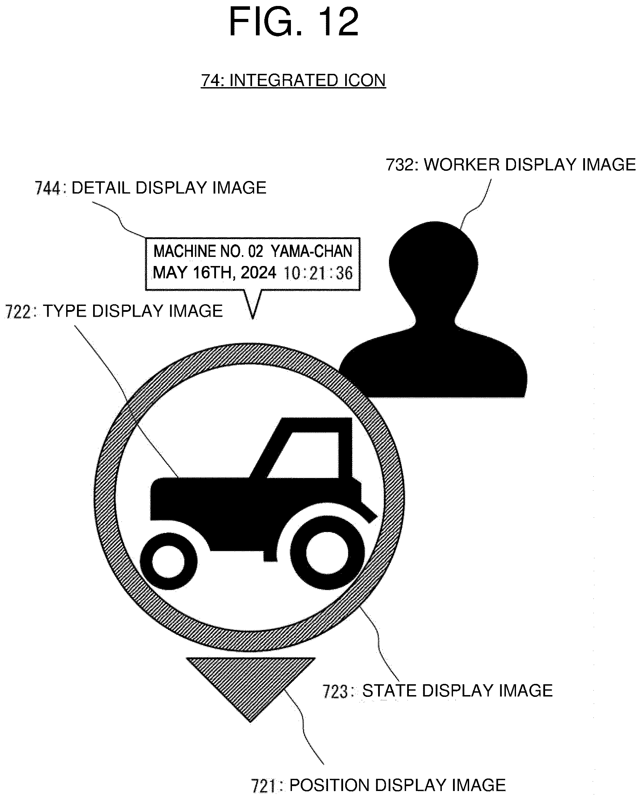

As illustrated in FIG. 12, the integrated icon 74 can indicate that the work device 2 being used by the worker 3 is stopped by switching the state display image 723. When the work device 2 being used by the worker 3 is stopped, the manager can estimate that the worker 3 is taking a break while riding on the work device 2 or near the work device 2. As an example, when it is estimated that the closest worker is taking a break in step S315 in FIG. 7B, the integrated icon 74 in FIG. 12 may be displayed. As another example, when it is estimated that the last worker is taking a break in step S314 in FIG. 7B, the integrated icon 74 in FIG. 12 may also be displayed.

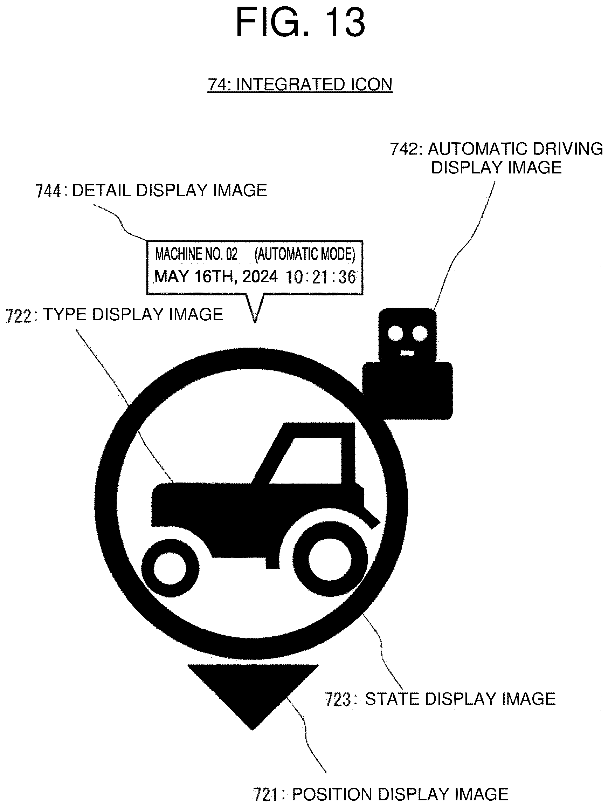

As illustrated in FIG. 13, the integrated icon 74 can represent that the work device 2 is in the automatic driving (automatic mode) by replacing the worker display image 732 with the automatic driving display image 742. Even when a situation in which the work device 2 is moving but is not being used by any worker 3 occurs, the manager can estimate that the work device is in the automatic driving. As an example, when it is estimated that the work device 2 is in the automatic driving in step S307 in FIG. 7B, the integrated icon 74 in FIG. 13 may be displayed.

### (Modification Example of Icon Display Method)

In the above embodiment, as illustrated in FIG. 11, the configuration in which the type display image 722 is arranged at the center of the integrated icon 74, the state display image 723 is arranged around the type display image 722, the position display image 721 is arranged below the state display image 723, and the worker display image 732 is arranged on the right upper portion of the state display image 723 has been described. As a modification example of this configuration, instead of displaying the integrated icon 74 illustrated in FIG. 11, the work device icon 72 illustrated in FIG. 9 and the worker icon 73 illustrated in FIG. 10 may be displayed while being switched in accordance with an operation by the user. As an example, first, the work device icon 72 and the worker icon 73 are generated in step S5 in FIG. 6, and only the work device icon 72 is displayed in step S6. Then, in step S6 in FIG. 6, when the user performs an operation on the work device icon 72 and the input/output device 65 in FIG. 5 receives the operation, the display portion 622 switches the display of the work device icon 72 to the display of the worker icon 73. When the user performs an operation on the worker icon 73 and the input/output device 65 receives the operation, the display portion 622 switches the display of the worker icon 73 to the display of the work device icon 72. Thereafter, each time the user performs an operation on the work device icon 72 or the worker icon 73, the display of the work device icon 72 and the display of the worker icon 73 may be alternately switched.

### (Modification Example of Work Device Icon)

In the above-described embodiment, as illustrated in FIG. 9, a configuration in which the work device icon 72 includes the position display image 721, the type display image 722, and the state display image 723 has been described. As a modification example of this configuration, the work device icon 72 may be obtained by integrating the position display image 721 with either the type display image 722 or the state display image 723. As an example, the work device icon 72 may be obtained by integrating the position display image 721 and the type display image 722, or may be obtained by integrating the position display image 721 and the state display image 723. In other words, any one of the type display image 722 and the state display image 723 may be omitted from the work device icon 72 illustrated in FIG. 9. Similarly, any one of the type display image 722 and the state display image 723 may be omitted from the integrated icon 74 illustrated in FIG. 11.

### (Modification Example of Work Device Icon and Integrated Icon)

Some or all of the position display image 721, the type display image 722, the state display image 723, the worker display image 732, and the detail display image 724 included in each of the work device icon 72 illustrated in FIG. 9 and the integrated icon 74 illustrated in FIG. 11 may be individually displayed in any color for each image. By displaying various types of information indicating the position of the work device 2, the type of the work device 2, the state of the work device 2, the worker 3, the details, and the like in different colors, the user can more intuitively identify each icon and each image.

The specific description has been made so far based on the embodiments of the present invention made by the inventor. However, it is needless to say that the present invention is not limited to the embodiments and various modifications may be made thereto without departing from the gist of the present invention. Furthermore, the features described in the embodiment can freely be combined within the scope that is not technically contradictory.

### (Supplementary Note)

The work management method, the work management system 1, and the work management program described in each embodiment can be described as follows.

A work management method according to a first aspect comprises:
acquiring first work device positional information obtained by measuring a position of a first work device that performs work in a field, and first worker positional information obtained by measuring a position of a first worker who performs the work with the first work device;
estimating a relationship between the first work device and the first worker, based on the first work device positional information and the first worker positional information; and
displaying a first integrated icon that integrally represents the first work device and the first worker at a position corresponding to the position of the first work device on a map representing the field when it is estimated that the first work device is being used by the first worker.

A work management method according to a second aspect is the work management method according to the first aspect, wherein
the acquiring includes:
   acquiring a plurality of pieces of worker positional information including the first worker positional information obtained by positioning respective positions of a plurality of workers including the first worker, and
the estimating includes:
   estimating, based on the first work device positional information and the first worker positional information, that a closest worker who is closest to the first work device among the plurality of workers is working with the first work device.

A work management method according to a third aspect is the work management method according to the second aspect, wherein
the first work device positional information includes:
   first work device positioning information representing a plurality of the positions of the first work device measured at a plurality of positioning times, and
   first work device positioning time information representing the plurality of positioning times at which the plurality of the positions of the first work device are measured,
worker positional information obtained by measuring respective positions of the plurality of workers includes:
   worker positioning information representing a plurality of the respective positions of the plurality of workers measured at a plurality of positioning times, and
   worker positioning time information indicating the plurality of positioning times at which the plurality of the respective positions of the plurality of workers are measured, and
the estimating further includes:
   calculating, based on the first work device positioning information and the worker positioning information, and the first work device positioning time information and the worker positioning time information, a distance from the position of the first work device to the respective positions of the plurality of workers when an interval between the positioning times at which the respective positions are measured is shorter than a first threshold time.

A work management method according to a fourth aspect is the work management method according to the third aspect, wherein
the estimating further includes:
estimating that the first work device is being used by, among the plurality of workers, a worker who has continued to have a distance from the first work device shorter than a first threshold distance for a time longer than a second threshold time and has a shortest distance from the first work device.

A work management method according to a fifth aspect is the work management method according to the fourth aspect, further comprising
at each of the plurality of positioning times of the first work device, recording, among the plurality of workers, a worker who is using the first work device, wherein
the estimating further includes:
when the first work device is stopped and a distance from the first work device to, among the plurality of workers, a last worker who has last used the first work device is shorter than the first threshold distance, estimating that the first work device is being used by the last worker; and
when the first work device is stopped and the distance from the first work device to the last worker is equal to or more than the first threshold distance, estimating that the first work device is being used by the closest worker.

A work management method according to a sixth aspect is the work management method according to the fifth aspect, further comprising:
for each combination of a plurality of work devices including the first work device and the plurality of workers, calculating a work result indicating a result of the work,
evaluating work efficiency of each of the plurality of workers, based on a record of use of the plurality of work devices by the plurality of workers and the work result.

A work management method according to a seventh aspect is the work management method according to the first aspect, wherein
the first integrated icon includes:
   a position display image that represents the position of the first work device,
   a type display image that represents a type of the first work device,
   a state display image that represents a state of the first work device,
   a worker display image that represents the first worker, and
the position display image, the type display image, the state display image, and the worker display image are arranged to be visually recognizable at the same time, and a positional relationship among the position display image, the type display image, the state display image, and the worker display image is fixed.

A work management method according to an eighth aspect is the work management method according to the first aspect, wherein
the first integrated icon includes:
   at least one image out of a type display image that represents a type of the first work device, a state display image that represents a state of the first work device, and a worker display image that represents the first worker, and
   a position display image that represents the position of the first work device, and
a plurality of images included in the first integrated icon are arranged to be visually recognizable at the same time.

A work management method according to a ninth aspect is the work management method according to the first aspect, wherein
displaying the first integrated icon includes:
selectively displaying any one of a first work device icon including a position display image representing the position of the first work device and a type display image representing a type of the first work device, and a first worker icon including the position display image and a worker display image representing the first worker, and
receiving an operation for mutually switching and displaying the first work device icon and the worker icon.

A work management system according to a tenth aspect is a work management system comprising:
an information acquisition portion that acquires first work device positional information obtained by measuring a position of a first work device that performs work in a field, and first worker positional information obtained by measuring a position of a first worker who performs the work with the first work device;
a relationship estimation portion that estimates a relationship between the first work device and the first worker, based on the first work device positional information and the first worker positional information; and
a display portion that displays a first integrated icon that integrally represents the first work device and the first worker at a position corresponding to the position of the first work device on a map representing the field when it is estimated that the first work device is being used by the first worker.

A work management program according to an eleventh aspect is a work management program for realizing predetermined process by being executed by an arithmetic device, wherein
the process including:
acquiring first work device positional information obtained by measuring a position of a first work device that performs work in a field, and first worker positional information obtained by measuring a position of a first worker who performs the work with the first work device;
estimating a relationship between the first work device and the first worker, based on the first work device positional information and the first worker positional information; and
displaying a first integrated icon that integrally represents the first work device and the first worker at a position corresponding to the position of the first work device on a map representing the field when it is estimated that the first work device is being used by the first worker.

### REFERENCE SIGNS LIST

1 work management system
2 work device
20 on-board terminal
21 bus
22 arithmetic device
221 positioning portion
222 transmission portion
23 storage device
230 recording medium
231 program storage portion
232 data storage portion
24 communication device
25 input/output device
26 positioning device
3, 3A, 3B worker
30, 30A, 30B worker terminal
31 bus
32 arithmetic device
321 authentication portion
322 positioning portion
323 transmission portion
33 storage device
330 recording medium
331 program storage portion
332 data storage portion
34 communication device
35 input/output device
36 authentication device
37 positioning device
4 network
5 work management device
51 bus
52 arithmetic device
521 information acquisition portion
522 relationship estimation portion
523 icon generation portion
524 output portion
53 storage device
530 recording medium
531 program storage portion
532 data storage portion
54 communication device
55 input/output device
6 manager terminal
61 bus
62 arithmetic device
621 reception portion
622 display portion
63 storage portion
630 recording medium
631 program storage portion
632 data storage portion
64 communication device
65 input/output device
651 touch panel
72 work device icon
721 position display image
722 type display image
723 state display image
724 detail display image
73 worker icon
731 position display image
732 worker display image
733 state display image
734 detail display image
74 integrated icon
742 automatic driving display image
744 detail display image
9 field
91 map
92 table

## Claims

1. A work management method comprising:
acquiring first work device positional information obtained by measuring a position of a first work device that performs work in a field, and first worker positional information obtained by measuring a position of a first worker who performs the work with the first work device;
estimating a relationship between the first work device and the first worker, based on the first work device positional information and the first worker positional information; and
displaying a first integrated icon that integrally represents the first work device and the first worker at a position corresponding to the position of the first work device on a map representing the field when it is estimated that the first work device is being used by the first worker.

2. The work management method according to claim 1, wherein
the acquiring includes:
acquiring a plurality of pieces of worker positional information including the first worker positional information obtained by positioning respective positions of a plurality of workers including the first worker, and
the estimating includes:
estimating, based on the first work device positional information and the first worker positional information, that a closest worker who is closest to the first work device among the plurality of workers is working with the first work device.

3. The work management method according to claim 2, wherein
the first work device positional information includes:
first work device positioning information representing a plurality of the positions of the first work device measured at a plurality of positioning times, and
first work device positioning time information representing the plurality of positioning times at which the plurality of the positions of the first work device are measured,
worker positional information obtained by measuring respective positions of the plurality of workers includes:
worker positioning information representing a plurality of the respective positions of the plurality of workers measured at a plurality of positioning times, and
worker positioning time information indicating the plurality of positioning times at which the plurality of the respective positions of the plurality of workers are measured, and
the estimating further includes:
calculating, based on the first work device positioning information and the worker positioning information, and the first work device positioning time information and the worker positioning time information, a distance from the position of the first work device to the respective positions of the plurality of workers when an interval between the positioning times at which the respective positions are measured is shorter than a first threshold time.

4. The work management method according to claim 3, wherein
the estimating further includes:
estimating that the first work device is being used by, among the plurality of workers, a worker who has continued to have a distance from the first work device shorter than a first threshold distance for a time longer than a second threshold time and has a shortest distance from the first work device.

5. The work management method according to claim 4, further comprising
at each of the plurality of positioning times of the first work device, recording, among the plurality of workers, a worker who is using the first work device, wherein
the estimating further includes:
when the first work device is stopped and a distance from the first work device to, among the plurality of workers, a last worker who has last used the first work device is shorter than the first threshold distance, estimating that the first work device is being used by the last worker; and
when the first work device is stopped and the distance from the first work device to the last worker is equal to or more than the first threshold distance, estimating that the first work device is being used by the closest worker.

6. The work management method according to claim 5, further comprising:
for each combination of a plurality of work devices including the first work device and the plurality of workers, calculating a work result indicating a result of the work,
evaluating work efficiency of each of the plurality of workers, based on a record of use of the plurality of work devices by the plurality of workers and the work result.

7. The work management method according to claim 1, wherein
the first integrated icon includes:
a position display image that represents the position of the first work device,
a type display image that represents a type of the first work device,
a state display image that represents a state of the first work device,
a worker display image that represents the first worker, and
the position display image, the type display image, the state display image, and the worker display image are arranged to be visually recognizable at the same time, and a positional relationship among the position display image, the type display image, the state display image, and the worker display image is fixed.

8. The work management method according to claim 1, wherein
the first integrated icon includes:
at least one image out of a type display image that represents a type of the first work device, a state display image that represents a state of the first work device, and a worker display image that represents the first worker, and
a position display image that represents the position of the first work device, and
a plurality of images included in the first integrated icon are arranged to be visually recognizable at the same time.

9. The work management method according to claim 1, wherein
displaying the first integrated icon includes:
selectively displaying any one of a first work device icon including a position display image representing the position of the first work device and a type display image representing a type of the first work device, and a first worker icon including the position display image and a worker display image representing the first worker, and
receiving an operation for mutually switching and displaying the first work device icon and the first worker icon.

10. A work management system comprising:
an information acquisition portion that acquires first work device positional information obtained by measuring a position of a first work device that performs work in a field, and first worker positional information obtained by measuring a position of a first worker who performs the work with the first work device;
a relationship estimation portion that estimates a relationship between the first work device and the first worker, based on the first work device positional information and the first worker positional information; and
a display portion that displays a first integrated icon that integrally represents the first work device and the first worker at a position corresponding to the position of the first work device on a map representing the field when it is estimated that the first work device is being used by the first worker.

11. A work management program for realizing predetermined process by being executed by an arithmetic device, wherein
the process including:
acquiring first work device positional information obtained by measuring a position of a first work device that performs work in a field, and first worker positional information obtained by measuring a position of a first worker who performs the work with the first work device;
estimating a relationship between the first work device and the first worker, based on the first work device positional information and the first worker positional information; and
displaying a first integrated icon that integrally represents the first work device and the first worker at a position corresponding to the position of the first work device on a map representing the field when it is estimated that the first work device is being used by the first worker.
